# EUROPEAN PATENT SPECIFICATION

(11) **EP 1 428 707 B1**
(45) Date of publication and mention of the grant of the patent: **11.03.2009**
(21) Application number: 02445172.6
(22) Date of filing: 09.12.2002
(51) Int. Cl.: B60J 5/04

(54) **Vehicle door assembly**
Fahrzeugtüranordnung
Ensemble de porte de véhicule

(43) Date of publication of application: 16.06.2004
(73) Proprietor: Ford Global Technologies, Inc., Dearborn, MI 48126 (US)
(72) Inventor: Nilsson, Bengt, 417 43 Göteborg (SE); Dybern, Ulf, 423 34 Torslanda (SE); Wickman, Andreas, 471 31 Skärhamn (SE)
(74) Representative: Andersson, Per Rune

(56) References cited:
- EP-A- 0 577 007
- EP-A- 0 788 912
- EP-A- 0 989 007
- DE-A- 19 519 509
- JP-A- 08 142 676
- US-A- 6 135 537

## Description

### TECHNICAL FIELD:

The present invention relates to a vehicle door assembly for a vehicle having a vehicle body structure, said door assembly comprising a front door having a front reinforcement beam arrangement and being pivotally connected to said vehicle body structure by means of a front hinge arrangement, and a rear door having a rear reinforcement beam arrangement and being pivotally connected to said vehicle body structure by means of a rear hinge arrangement, said front and rear reinforcement beam arrangements being arranged for absorption and distribution of energy resulting from impact forces occuring during a collision involving said vehicle.

### BACKGROUND ART:

In the field of motor vehicles, for example cars, there is a general demand for vehicle body structures which fulfill certain requirements as regards strength and deformation. In this manner, a high degree of safety can be provided for the occupants in a vehicle during collisions and other situations involving very high loads due to impact forces acting on the vehicle.

In order to obtain a high degree of safety for the occupants of a vehicle, the body structure of the vehicle must be designed and manufactured in a manner which provides a high strength and resistance to impact forces, suitably by absorbing and distributing the impact forces in an effective manner. This is normally achieved by means of various reinforcement structures and components in the vehicle.

As regards the doors of a vehicle, such as a car, it can be noted that it is previously known to provide such a door with various types of structural reinforcements so as to obtain the desired degree of safety and protection for the occupants. In particular, such structural reinforcements can be in the form of beams or other reinforcement components which are suitably arranged inside the door, i.e. between the inner and outer panels of the door, and being attached in a suitable manner to the frame structure of the door. In this manner, the structural reinforcements provide absorption and distribution of impact forces during a collision, in particular involving a side impact against the doors.

The patent document US 6135537 discloses a reinforcement structure for a door assembly in a vehicle. This reinforcement structure comprises two cross beams which are attached directly to corresponding hinges of the door. In this manner, impact energy can be transferred from the cross beams to the vehicle body through the hinges.

Furthermore, the document DE 19519509 teaches a vehicle door assembly having two cross beams, an upper beam and a lower beam. The upper beam is formed in an integrated manner with the door frame structure and the lower beam is a separate beam which is fastened at its ends to the door frame structure. In particular, the front end of the lower beam is attached to a hinge arrangement for the door and the rear end of the lower beam is attached to a door latch reinforcement component. The upper beam is arranged generally horizontally and the lower beam is inclined.

Although these previously known arrangements as well as the one disclosed in EP 0 788 912 function in a satisfactory manner, there is still a demand for further improvements in the field of impact-protective arrangements for vehicle door assemblies and vehicle body structures.

### DISCLOSURE OF INVENTION:

An object of the present invention is to provide an improved vehicle door assembly in which the forces acting on a vehicle in the event of a collision can be absorbed and distributed in an effective manner, so as to provide a high degree of safety for the occupants of the vehicle.

In accordance with the invention, this object is accomplished by the features of claim 1.

By means of the invention, certain advantages are provided. For example, the fact that the front and rear reinforcement beam arrangements cooperate during impact means that they function as an integrated structure which is mechanically connected in a reinforced manner. In contrast to prior art, the invention comprises front and rear reinforcement beam arrangements which are coupled to the vehicle body structure, i.e. said arrangements are not just coupled to the frame structure of each door which is the case according to prior art. By means of the invention, a force resulting from an impact can be absorbed for example by any one of the doors and be distributed via the other door and further on to the remaining vehicle body structure. This means that the forces occurring for example during collisions can be absorbed in a more effective manner than in previously known vehicle door assemblies.

The term "functional integration" (and "functionally integrate" etc.) as used in this context refers to the fact that a plurality of components, such as a front reinforcement beam arrangement and a rear reinforcement beam arrangement arranged in the front and rear vehicle doors, respectively, are arranged so as to cooperate together in a functional manner. This means for example that a vehicle door assembly comprising two doors can be arranged so that even if the reinforcement beam arrangements are not physically attached to each other or integrated, they operate essentially as one single unit, i.e. as a "functionally integrated" structure. This type of structure is employed in the present invention so that impact forces which occur during a collision can be absorbed and transferred throughout the entire vehicle body structure. This leads to a high degree of safety for the vehicle occupants.

In particular, the front and rear reinforcement beam arrangements are coupled in a mechanical manner to the vehicle body structure via reinforced members which in turn comprise hinges and a door latch device.

Certain vehicles are provided with a particular safety arrangement, a so-called side impact protection system, which is previously known per se and is described in U.S. patent no. 5348342. Such a side impact protection system comprises two tubes arranged under the vehicle's two front seats and extending in a direction generally transverse to the longitudinal direction of the vehicle. Also, a side impact protection system comprises impact-absorbing components arranged behind a side impact area, i.e. an area in the vehicle body structure corresponding to the position of the two tubes and corresponding to a position at which impact can be expected to occur during a side collision. The impact-absorbing components are arranged for absorbing and transferring forces occuring during a collision against the impact area. Such a known side impact protection system is also provided with sensors for detecting a collision-like situation and for inflating air bags mounted on each seat in such a situation. According to the invention, the above-mentioned front reinforcement beam arrangement can be implemented in a car having a side impact protection system in a manner so that it overlaps the side impact area. This means that the reinforcement beam arrangement according to the invention can be incorporated in a functional manner with a side impact protection system for providing an even higher degree of safety for the occupants of a vehicle, in particular during collisions involving a side impact against the vehicle.

### BRIEF DESCRIPTION OF DRAWINGS:

In the following text, the invention will be described in detail with reference to the attached drawings. These drawings are used for illustration only and do not in any way limit the scope of the invention. In the drawings:
- Fig. 1: is a schematical side view indicating the main components of a vehicle door assembly according to the present invention; and
- Fig. 2: is a cross-sectional view through a so-called B-pillar, along the line I-I in Fig 2.

### PREFERRED EMBODIMENTS:

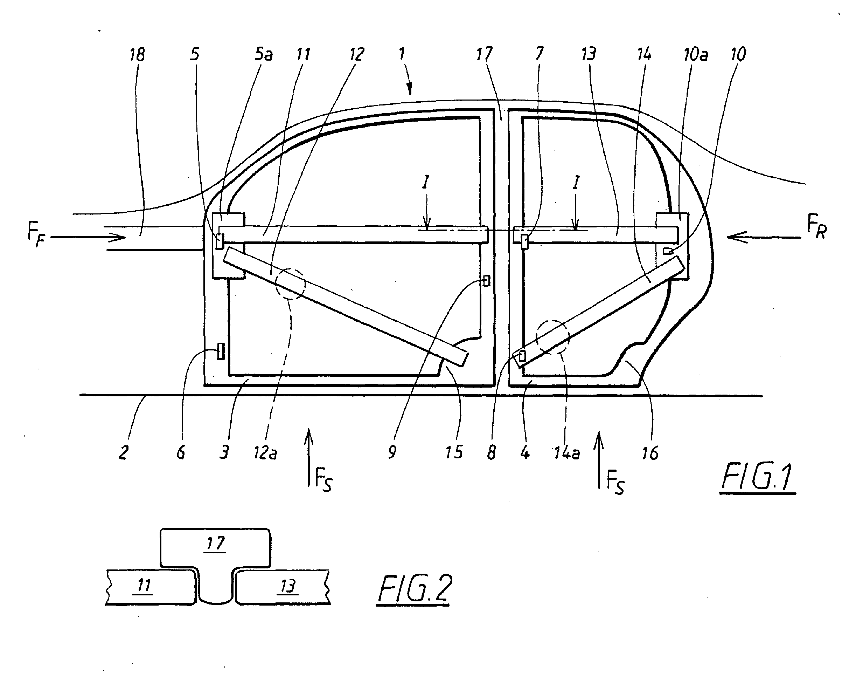

In the following, an embodiment of the present invention will be described in detail. With reference to Fig. 1, there is shown a side view of a vehicle 1 having a vehicle body structure 2, as shown in a simplified and schematical manner. In a manner which is known per se, the vehicle body structure 2 comprises a front door opening 3 and a rear door opening 4. The front door opening 3 and the rear door opening 4 are arranged for receiving a front door and a rear door (which are not shown in the drawing), respectively. More precisely, the front door can be mounted in the front door opening 3 in a pivotal manner via a front upper hinge 5 and a front lower hinge 6. In a similar manner, the rear door can be mounted in the rear door opening 4 in a pivotal manner via a rear upper hinge 7 and a rear lower hinge 8. Furthermore, the front door opening 3 is provided with a front door latch device 9 for cooperating with a latch (not shown) in the front door, thereby allowing locking of the front door. Also, the rear door opening 4 is provided with a rear door latch device 10 for cooperating with a further latch (not shown) in the rear door, thereby allowing locking of the rear door.

The vehicle body structure 2 shown in Fig. 1 is of the type as used in a medium-size passenger car. However, it should be noted that the invention is not limited to such vehicles only, but can be applied in all types of vehicles having a door assembly, for example cars, buses and trucks.

The front door opening 3 is arranged so as to cooperate with a front reinforcement beam arrangement comprising an front upper beam 11 and a front lower beam 12 which are arranged in the front door. It should be noted that only the front upper beam 11 and the front lower beam 12 are shown in Fig. 1, i.e. not the actual front door in which these beams 11, 12 are arranged. The front upper beam 11 extends essentially horizontally between the area in which the front upper hinge 5 is arranged and an area above the front latch device 9. The front lower beam 12 extends in an inclined manner between the area in which the front upper hinge 5 is arranged and an area below the front latch device 9. The manner in which the front upper beam 11 and the front lower beam 12 are mounted in connection with the front upper hinge 5 will be described in greater detail below.

In a manner similar to the front door opening 3, the rear door opening 4 is arranged to cooperate with a rear reinforcement beam arrangement comprising an rear upper beam 13 and a rear lower beam 14. Similar to the front door opening 2, only the rear upper beam 13 and the rear lower beam 14 are shown in Fig. 1, i.e. not the actual rear door in which these beams 13, 14 are arranged. The rear upper beam 13 extends essentially horizontally between the area in which rear upper hinge 7 is arranged and the area in which the rear latch device 10 is arranged. The rear lower beam 14 extends in an inclined manner between the area in which the rear lower hinge 8 is arranged and the area in which the rear latch device 10 is arranged. The manner in which the rear upper beam 13 and the rear lower beam 14 are mounted in connection with the rear latch device 10 will be described in greater detail below.

The front upper beam 11 and the rear upper beam 13 are preferably integrated in the frame structure of the respective door, whereas the front lower beam 12 and rear lower beam 14 are suitably arranged as separate beams which are attached to the frame structure of each door, i.e. during manufacturing of the doors. All the beams 11, 12, 13, 14 are formed in a manner, i.e. with regard to its dimensions, cross-section and material, which is selected so as to withstand a high load in the event of an impact load during for example a collision with the vehicle in question.

An important feature of the present invention relates to the fact that the vehicle body structure 2, the front door and the rear door are functionally integrated in a manner so that the front reinforcement beam arrangement and the rear reinforcement beam arrangement cooperate with each other and also with the vehicle body structure 2 for absorbing and distributing forces in the event of a collision. In this manner, the energy resulting from impact forces which can be expected to occur during a collision will be absorbed by means of either the front reinforcement beam arrangement or the rear reinforcement beam arrangement in the front door and rear doors, or both, and furthermore throughout the vehicle body structure 2, in a manner which will be explained in greater detail below.

Assuming for example that the vehicle 1 shown in Fig. 1 is involved in a front collision in which an impact force F_{F} occurs, as indicated by means of an arrow in Fig. 1, it can be noted that such a force F_{F} will act against the vehicle body structure 2 and furthermore against the front upper beam 11. Such a force F_{F} will be transferred along the extension of the front upper beam 11. In order to distribute and absorb the force F_{F} in an optimal manner, the invention relies on the principle that the front reinforcement beam arrangement and the rear reinforcement beam arrangement are functionally integrated in a manner so that the front upper beam 11 and rear upper beam 13 are essentially aligned. This means that said beams 11, 13 extend along generally the same direction, i.e. along a generally common longitudinal direction. As a result, the force F_{F} acting on the front end of the front upper beam 11 will be transmitted in an effective manner to the rear upper beam 13. In this manner, the force F_{F} can be absorbed effectively, which results in a high degree of safety for the occupants of the vehicle. To further improve these properties, the rear end of the front upper beam 11 is arranged as close as possible (in the longitudinal direction of the vehicle) to the front end of the rear upper beam 13. In summary, the four beams 11, 12, 13, 14 are functionally integrated so as form a safety structure which in turn is highly integrated with the remaining parts of the vehicle body structure 2.

It can be noted that a part of the impact force F_{F} will also be guided along the front lower beam 12 and further on to its rear attachment point.

As shown in Fig. 1, it should be noted that a so-called B-pillar 17 is arranged in a conventional manner between the rear part of the front door 2 and the front part of the rear door 3. This means that for example during absorption of a force F_{F} acting on the front end of the front upper beam 11 will be transmitted to the rear upper beam 13 via the B-pillar 17. Preferably, the rear end of the front upper beam 11 and the front end of the rear upper beam 13 are arranged as close as possible to the the B-pillar 17. This is shown in detail in Fig. 2, which is a cross-sectional view of the B-pillar 17 along the line I-I in Fig. 1. The B-pillar 17 has a cross-section which is generally T-shaped. Furthermore, Fig. 2 indicates the manner in which the front upper beam 11 and the rear upper beam 13 are aligned with the B-pillar 17. It can be noted that the end portions of the front upper beam 11 and the rear upper beam 13 are shaped so as to match the T-shape of the B-pillar 17. This means that the front upper beam 11 and the rear upper beam 13 can be positioned in a laterally overlapping manner and very close to the B-pillar 17, which results in a high degree of functional integration.

It should be noted that all the end sections of all the beams 11, 12, 13, 14 are preferably arranged in a manner so that they overlap the vehicle body support structure 2 in a lateral manner, as shown in Fig. 1. This means that not only the end sections of the front upper beam 11 and the rear upper beam 13, as shown in Fig. 2, are arranged in a laterally overlapping manner, but all the remaining end sections of the front and rear reinforcement beam arrangements are also arranged to laterally overlap the vehicle body structure 2 as indicated in Fig. 1. In this manner, impact forces can be absorbed in an effective manner, in particular during side collisions.

In case the vehicle shown in Fig. 1 is involved in a rear collision, a rear impact force F_{R} will act on the vehicle, as indicated in Fig. 1. In this situation, this rear impact force F_{R} will act against the rear upper beam 13. Furthermore, this force F_{R} will act along generally the same direction as the extension of the rear upper beam 13 and will be transmitted to the front upper beam 11, via the B-pillar 17. In this manner, the impact force F_{R} will be guided and absorbed in an effective manner in the vehicle 1. The transfer of the rear impact force F_{R} can be optimized due to the fact that the rear upper beam 13 is preferably aligned with the front upper beam 11, as mentioned above.

It can be noted that a part of the rear impact force F_{R} will also be distributed along the rear lower beam 14 and further on to its attachment point close to the rear lower hinge 8.

As explained above, the invention provides a significant advantage resulting from the functional integration of the front reinforcement beam arrangement and the rear reinforcement beam arrangement and the remaining parts of the vehicle body structure 2. The forces F_{F}, F_{R} resulting from a front or rear impact during a collision can for example be absorbed primarily by one of the doors and then be transferred to the other door via the arrangement of the beams 11, 12, 13, 14. Also, due to the fact that the doors are mechanically coupled to the vehicle body structure 2 via the beams 11, 12, 13, 14, the forces are absorbed in an effective manner.

In case the vehicle 1 shown in Fig. 1 is involved in a side collision, a side impact force F_{S} may occur, as indicated by means of arrows in Fig. 1. In this situation, the side impact force F_{S} will act against the front door or the rear door, or both. Due to the fact that the front door is provided with the front upper beam 11 and a front lower beam 12, and the rear door is provided with the rear upper beam 13 and the rear lower beam 14, the energy resulting from the side impact force F_{S} can be absorbed at least partly in order to provide a high degree of safety for the occupants of the vehicle. Again, it can be noted that the invention relies on the principle that the front and rear reinforcement beam arrangements operate together as functionally integrated units which cooperate for the absorption of energy. This means that for example, energy acting on the front door will be absorbed by the front upper beam 11 and the front lower beam 12 and will further be transferred to the rear door and its beams 13, 14, and further to the remaining vehicle body structure 2.

As mentioned above, the invention can be implemented in vehicles of the type which comprises a particular safety arrangement, a so-called side impact protection system. In such vehicles, the side impact protection system is arranged in the vehicle behind an area of the vehicle body structure referred to as a side impact area and indicated by means of reference numreal 15 in Fig. 1, i.e. an area below the front latch device 9. This side impact area 15 is defined in a section of the vehicle body 2 in which a side impact can be expected to occur during side collisions. As previously known, such a side impact protection system may comprise two tubes being arranged under the vehicle's two front seats (not shown in Fig. 1) and extending in a direction generally transverse to the longitudinal direction of the vehicle. Also, a side impact protection system comprises impact-absorbing components (not shown in Fig. 1) which can be arranged behind an area such as the side impact area 15, for absorbing and transferring forces occuring during a side impact. Said system is also provided with sensors for detecting a collision-like situation and for inflating air bags mounted on each seat in such a situation.

In the event that the arrangement according to the invention is used in a vehicle comprising a side impact protection system located behind the side impact area 15, the front lower beam 12 is arranged so as to extend in a manner so that its rear end at least partly overlaps said side impact area 15. In this manner, the side forces acting on the front reinforcement beam arrangement can be absorbed not only by the front reinforcement beam arrangement by itself, but also by the side impact protection system, as a result of the overlapping arrangement of the front lower beam 12.

Preferably, the vehicle can also be provided with a further side impact protection system arranged behind a rear side impact area 16 forming part of the rear door opening 3.

According to the preferred embodiment of the invention, the front upper beam 11 and the front lower beam 12 are attached in the area of the front upper hinge 5. By using this attachment point, these beams 11, 12 will be mechanically coupled in a reinforced manner with each other and the vehicle body structure 2, in order to further improve the energy absorption throughout the entire vehicle. More precisely, the front ends of the front upper beam 11 and the front lower beam 12, respectively, are attached to a reinforcement member in the form of a front upper hinge bracket 5a, which acts so as to connect the front upper beam 11 and the front lower beam 12 and also as a support for the front upper hinge 5. In this manner, the front upper hinge bracket 5a forms a reinforced attachment member which is directly and mechanically coupled to the vehicle body 2. This contributes to the absorption and distribution of energy due to impact forces.

A similar advantage is obtained due to the fact that the rear ends of the rear upper beam 13 and the rear lower beam 14, respectively, are attached in the area of the rear latch device 10. Also, the rear ends of the rear upper beam 13 and the rear lower beam 14, respectively, are attached in said area close together. Preferably, said rear ends are attached to a further reinforcement member in the form of a latch bracket 10a which is attached to the frame of the rear door in the area of the rear latch device 10. This means that the rear ends of the rear upper beam 13 and the rear lower beam 14, respectively, are connected to each other and to the vehicle body structure 2 via said latch reinforcement bracket 10a, which constitutes a enforced fastening of said beams 13, 14 and which is directly and mechanically coupled to the vehicle body 2. This contributes to the improved energy absorption according to the invention.

Furthermore, the rear end of the front lower beam 12 and the front end of the rear lower beam 14 are suitably arranged so they are positioned close to each other. This means that the rear attachment point of the front lower beam 12 in the side impact area 15 and the front attachment point of the rear lower beam 14 are situated close to each other. Such an attachment will contribute to the fact that the beams 11, 12, 13, 14 together with the vehicle body structure 2 form an essentially closed safety structure.

In a similar manner, the rear upper beam 13 is attached to the vehicle body structure 2 in an area in which the rear upper hinge 7 is arranged, and also the rear lower beam 14 is attached to the vehicle body structure 2 in an area in which the rear lower hinge 8 is arranged. This type of arrangement also forms reinforced attachment points which contribute to the energy absorption.

As mentioned above, the invention is preferably arranged so that the rear end of the front lower beam 12 is arranged so as to overlap the side impact area 15 of the vehicle body 2, i.e. below the front latch device 9. More precisely, the rear end of the front lower beam 12 is attached in a manner so that its lower end section overlaps, partly or in full, the above-mentioned side impact area 15. As explained above, the side impact area 15 is an area which can be arranged so as to cover certain impact-receiving components forming part of a side impact protection system which can be arranged in the vehicle. As a result, a collision involving a side impact F_{S} against at least the front door will lead to an impact against the front upper beam 11 and the front lower beam 12. This means that a side impact force F_{S} acting upon the front door, and consequently also acting upon the front lower beam 12, will be transferred in an effective manner to a side impact protection system in the vehicle via the attachment point of the front lower beam 12 in the side impact area 15. In this manner, the invention can be used to improve the side impact safety by using an existing side impact protection system which operate together with the front lower beam 12.

Furthermore, the invention is preferably arranged so that impact during a front collision can be absorbed in an advantageous manner by using an existing side beam in the vehicle 1, said side beam being schematically indicated with reference numeral 18 in Fig. 1. The side beam 18 is one of the principal beam components in today's cars, and normally extends in the upper front section of the vehicle in question, i.e. on each side of the engine compartment (not shown) of the vehicle. According to a preferred embodiment, the present invention is arranged so that the front upper beam 11 is essentially aligned with respect to said side beam 18, i.e. the front upper beam 11 and the side beam 18 extend along a generally common longitudinal direction. This means that that a front force F_{F} acting on the side beam 18 is effectively transferred to the front upper beam 11 (and further to the rear upper beam 13 and the remaining parts of the vehicle body structure 2, as explained above).

In the event of a collision of the type which involves a high side impact force F_{S}, it can be expected that there is a risk that the front door or the rear door, or both, may be deformed in a manner so that they intrude into the passenger compartment of the vehicle. This of course implies a risk for injuries of the occupants in the vehicle. In order to minimize the risk for injuries during such a situation, the front lower beam 12 and the rear lower beam 14 are preferably arranged in a manner so that a controlled deformation area 12a, 14a is defined in each of said beams 12, 14. In this manner, it can be determined which part of the beams 12, 14 will be allowed to intrude into the passenger compartment during side impact.

More precisely, it has been discovered that a "desired" deformation area, i.e. a position at which intrusion of the front lower beam 12 can be allowed, corresponds to a position in front of the expected position of the occupant in the corresponding front seat (not shown). This "desired" position corresponds to a weakened section or front deformation area 12a of the front lower beam 12. Preferably, this is obtained by forming the front lower beam 12 in a manner so that the front deformation area 12a has a lower strength than the remaining parts of the front lower beam 12. This can be achieved by a suitable choice of dimensions, form or material of the front lower beam 12. It can also be achieved by providing the front lower beam 12 with a suitable reinforcement component at a suitable position along the front lower beam 12. For example, the front lower beam 12 can be shaped with a cross-section corresponding to a closed box at those section where a high strength is desired and an a open box in the front deformation area 12a.

The rear lower beam 14 is arranged in a manner which corresponds to the front lower beam 12, i.e. it is designed with a rear deformation area 14a which will yield and intrude into the passenger compartment at a controlled position ahead of the expected position of the occupants in the vehicle rear seat upon side impact of a certain magnitude.

Consequently, by providing the above-mentioned deformation areas 12a, 14a, the position at which the front lower beam 12 and the rear lower beam 14 will intrude into the passenger compartment (at a certain side impact) can be chosen. This contributes to the high degree of safety provided by means of the present invention.

In summary, the invention relies on the principle that it comprises a vehicle door assembly having front and rear reinforcement beam arrangements which are which are functionally integrated with each other and the vehicle body structure 2. This means that the entire structure comprising the two doors, the beams 11, 12, 13, 14 and also the remaining vehicle body structure 2 forms a unit which absorbs and distributes the impact forces in an effective manner. Primarily, this is achieved by means of the respective beams 11, 12, 13, 14 in the doors. In this manner, the vehicle body structure 2 and the front and rear reinforcement beam arrangements form an essentially closed system which is mechanically coupled together in an integrated manner so as to cooperate for energy absorption and for distributing the forces acting on the vehicle upon impact. This means that according to the invention, a type of protective "safety cage" is defined in the vehicle, i.e. an essentially closed, force-distributing safety structure.

The invention is not limited to the embodiment described, but can be modified within the scope of the appended claims. For example, the dimensions, materials and form of the vehicle body 2, the doors and the beams 11, 12, 13, 14 may vary. Also, it should be noted that during collisions, it is common that for example both a front force F_{F} and a side force F_{S} act on the vehicle at the same time.

Finally, the present invention is not limited to use in cars but is also suitable for other types of vehicles, such as trucks and buses.

## Claims

1. Vehicle door assembly for a vehicle (1) having a vehicle body structure (2), said door assembly comprising said vehicle body structure (2) and a front door having a front reinforcement beam arrangement (11, 12) and being pivotally connected to said vehicle body structure (2) by means of a front hinge arrangement (5, 6), and a rear door having a rear reinforcement beam arrangement (13, 14) and being pivotally connected to said vehicle body structure (2) by means of a rear hinge arrangement (7, 8), said front and rear reinforcement beam arrangements (11, 12, 13, 14) being arranged for absorption and distribution of energy resulting from impact forces (F_{F}, F_{R}, F_{S}) occurring during a collision involving said vehicle (1), wherein said front reinforcement beam arrangement (11, 12) comprises a front upper beam (11) and said rear reinforcement beam arrangement (13, 14) comprises a rear upper beam (13), and wherein said front upper beam (11) and said rear upper beam (13) extend essentially horizontally and are aligned along a generally common longitudinal direction, **characterized in that** said front reinforcement beam arrangement (11, 12) furthermore comprises an inclined front lower beam (12) and that said rear reinforcement beam arrangement (13, 14) furthermore comprises an inclined rear lower beam (14), and said front reinforcement beam arrangement (11, 12) and said rear reinforcement beam arrangement (13, 14) are functionally integrated and cooperate with each other and with said vehicle body structure (2) during said absorption and distribution of energy, for absorption and distribution of an impact force (F_{F}) and wherein the front and rear reinforcement beam arrangements (11, 12; 13, 14) are coupled in a mechanical manner to the vehicle body structure (2) via a front reinforcement member which supports an upper hinge (5) of the front door and a rear reinforcement member in the form of a rear door latch bracket (10a).

2. Vehicle door assembly according to claim 1, **characterized in that** said front upper beam (11) and front lower beam (12) have their respective front ends attached to a reinforcement member (5a) comprising an upper front hinge (5) forming part of said front hinge arrangement (5, 6).

3. Vehicle door assembly according to claim 2, **characterized in that** said rear upper beam (13) has its front end attached to an area close to a rear upper hinge (7) forming part of said rear hinge arrangement (7, 8), said rear lower beam (14) having its front end attached close to a rear lower hinge (8) forming part of said rear hinge arrangement (7, 8).

4. Vehicle door assembly according to any one of claims 2-3, **characterized in that** the rear ends of the rear upper beam (13) and the rear lower beam (14) are attached to a reinforcement member (10a) supporting a rear latch device (10).

5. Vehicle door assembly according to any one of claims 2-4, **characterized in that** the rear end of said front lower beam (12) is arranged so as to overlap, at least partly, a side impact area (15) in said vehicle body structure (2).

6. Vehicle door assembly according to any one of claims 2-5, **characterized in that** the end sections of said beams (11, 12, 13, 14) are arranged so as to laterally overlap said vehicle body structure (2).

7. Vehicle door assembly according to any one of claims 2-6, wherein said vehicle (1) comprises a front side beam (18), **characterized in that** said front upper beam (11) is aligned with said side beam (18) along a generally common longitudinal direction, for absorption of an impact force (F_{F}).

8. Vehicle door assembly according to any one of the preceding claims, **characterized in that** the front reinforcement beam arrangement (11, 12) and the rear reinforcement beam arrangement (13, 14) comprises at least one controlled deformation area (12a; 14a).

9. Vehicle door assembly according to claim 8, **characterized in that** said at least one controlled deformation area (12a; 14a) is arranged as a weakened section (12a) in the front lower beam (12).

10. Vehicle door assembly according to claim 8 or 9, **characterized in that** said at least one controlled deformation area (12a; 14a) is arranged as a weakened section (12a) in the rear lower beam (14).

11. Vehicle comprising a vehicle door assembly as defined in any one of the preceding claims.

## Patentansprüche

1. Fahrzeugtürbaugruppe für ein eine Fahrzeugkörperstruktur (2) aufweisendes Fahrzeug (1), wobei die Türbaugruppe die Fahrzeugkörperstruktur (2) und eine vordere Türe, die eine vordere Verstärkungsbalkenanordnung (11, 12) aufweist und mittels einer vorderen Gelenkanordnung (5, 6) drehbar mit der Fahrzeugkörperstruktur (2) verbunden ist, und eine hintere Tür umfasst, die eine hintere Verstärkungsbalkenanordnung (13, 14) aufweist und mittels einer hinteren Gelenkanordnung (7, 8) drehbar mit der Fahrzeugkörperstruktur (2) verbunden ist, wobei die vordere und die hintere Verstärkungsbalkenanordnung (11, 12, 13, 14) zur Absorption und Verteilung der aus während einer Kollision auftretenden, das Fahrzeug (1) betreffenden Einwirkungskräften (F_{F}, F_{R}, F_{S}) resultierenden Energie eingerichtet ist, wobei die vordere Verstärkungsbalkenanordnung (11, 12) einen vorderen oberen Balken (11) umfasst, und die hintere Verstärkungsbalkenanordnung (13, 14) einen hinteren oberen Balken (13) umfasst, und wobei sich der vordere obere Balken (11) und der hintere obere Balken (13) im Wesentlichen horizontal erstrecken und entlang einer im Allgemeinen gemeinsamen Längsrichtung angeordnet sind,
**dadurch gekennzeichnet, dass**
die vordere Verstärkungsbalkenanordnung (11, 12) weiter einen geneigten vorderen unteren Balken (12) umfasst, und die die hintere Verstärkungsbalkenanordnung (13, 14) weiter einen geneigten hinteren unteren Balken (14) umfasst, und die vordere Verstärkungsbalkenanordnung (11, 12) und die hintere Verstärkungsbalkenanordnung (13, 14) funktional integriert sind, und miteinander und mit der Fahrzeugkörperstruktur (2) während der Absorption und Verteilung von Energie zur Absorption und Verteilung einer Einwirkungskraft (F_{F}) kooperieren, und wobei die vordere und die hintere Verstärkungsbalkenanordnung (11, 12; 13, 14) auf mechanische Weise mit der Fahrzeugkörperstruktur (2) über ein vorderes Verstärkungselement gekoppelt sind, das ein oberes Gelenk (5) der vorderen Tür und ein hinteres Verstärkungselement in der Gestalt einer hinteren Türriegelhalterung (10a) stützt.

2. Fahrzeugtürbaugruppe gemäß Anspruch 1, **dadurch gekennzeichnet, dass** der vordere obere Balken (11) und der vordere untere Balken (12) ihre entsprechenden vorderen Enden an einem Verstärkungselement (5a) angebracht haben, das ein einen Teil der vorderen Gelenkanordnung (5, 6) ausbildendes oberes vorderes Gelenk (5) umfasst.

3. Fahrzeugtürbaugruppe gemäß Anspruch 2, **dadurch gekennzeichnet, dass** der hintere obere Balken (13) sein vorderes Ende an einem Gebiet angebracht hat, das nahe dem einen Teil der hinteren Gelenkanordnung (7, 8) ausbildenden hinteren oberen Gelenk (7) befindlich ist, wobei der hintere untere Balken (14) sein vorderes Ende nahe dem einen Teil der hinteren Gelenkanordnung (7, 8) ausbildenden hinteren unteren Gelenk (8) angebracht hat.

4. Fahrzeugtürbaugruppe gemäß einem der Ansprüche 2-3, **dadurch gekennzeichnet, dass** das hintere Ende des hinteren oberen Balkens (13) und des hinteren unteren Balkens (14) an einem eine hintere Riegelvorrichtung (10) stützenden Verstärkungselement (10a) angebracht sind.

5. Fahrzeugtürbaugruppe gemäß einem der Ansprüche 2-4, **dadurch gekennzeichnet, dass** das hintere Ende des vorderen unteren Balkens (12) eingerichtet ist, um ein Seiteneinwirkungsgebiet (15) in der Fahrzeugkörperstruktur (2) zumindest teilweise zu überlappen.

6. Fahrzeugtürbaugruppe gemäß einem der Ansprüche 2-5, **dadurch gekennzeichnet, dass** die Endsektionen der Balken (11, 12, 13, 14) eingerichtet sind, um die Fahrzeugkörperstruktur (2) seitlich zu überlappen.

7. Fahrzeugtürbaugruppe gemäß einem der Ansprüche 2-6, bei der das Fahrzeug (1) einen vorderen Seitenbalken (18) umfasst, **dadurch gekennzeichnet, dass** der vordere obere Balken (11) mit dem Seitenbalken (18) entlang einer im Allgemeinen gemeinsamen Längsrichtung zur Absorption einer Einwirkungskraft (F_{F}) angeordnet ist.

8. Fahrzeugtürbaugruppe gemäß einem der vorangegangenen Ansprüche, **dadurch gekennzeichnet, dass** die vordere Verstärkungsbalkenanordnung (11, 12) und die hintere Verstärkungsbalkenanordnung (13, 14) zumindest ein kontrolliertes Verformungsgebiet (12a, 14a) umfassen.

9. Fahrzeugtürbaugruppe gemäß Anspruch 8, **dadurch gekennzeichnet, dass** das zumindest eine kontrollierte Verformungsgebiet (12a, 14a) als eine geschwächte Sektion (12a) im vorderen unteren Balken (12) eingerichtet ist.

10. Fahrzeugtürbaugruppe gemäß Anspruch 8 oder 9, **dadurch gekennzeichnet, dass** das zumindest eine kontrollierte Verformungsgebiet (12a, 14a) als eine geschwächte Sektion (12a) im hinteren unteren Balken (14) eingerichtet ist.

11. Fahrzeug, das eine in einem der vorangegangenen Ansprüche definierte Fahrzeugtürbaugruppe umfasst.

## Revendications

1. Ensemble de portières de véhicule pour un véhicule (1) comportant une structure de carrosserie de véhicule (2), ledit ensemble de portières comprenant ladite structure de carrosserie de véhicule (2) et une portière avant comportant un agencement de poutres de renforcement avant (11, 12) et reliée de manière pivotante à ladite structure de carrosserie de véhicule (2) au moyen d'un agencement de charnières avant (5, 6), et une portière arrière comportant un agencement de poutres de renforcement arrière (13, 14) et reliée de manière pivotante à ladite structure de carrosserie de véhicule (2) au moyen d'un agencement de charnières arrière (7, 8), lesdits agencements de poutres de renforcement avant et arrière (11, 12, 13, 14) étant agencés pour l'absorption et la répartition de l'énergie résultant de forces d'impact (F_{F}, F_{R}, F_{S}) apparaissant pendant une collision impliquant ledit véhicule (1), dans lequel ledit agencement de poutres de renforcement avant (11, 12) comprend une poutre supérieure avant (11) et ledit agencement de poutres de renforcement arrière (13, 14) comprend une poutre supérieure arrière (13), et dans lequel ladite poutre supérieure avant (11) et ladite poutre supérieure arrière (13) s'étendent essentiellement horizontalement et sont alignées le long d'une direction longitudinale généralement commune, **caractérisé en ce que** ledit agencement de poutres de renforcement avant (11, 12) comprend en outre une poutre inférieure avant (12) inclinée et **en ce que** ledit agencement de poutres de renforcement arrière (13, 14) comprend en outre une poutre inférieure arrière (14) inclinée, et ledit agencement de poutres de renforcement avant (11, 12) et ledit agencement de poutres de renforcement arrière (13, 14) sont fonctionnellement intégrés et coopèrent l'un avec l'autre et avec ladite structure de carrosserie de véhicule (2) pendant lesdites absorption et répartition de l'énergie, pour l'absorption et la répartition d'une force d'impact (F_{F}), et dans lequel les agencements de poutres de renforcement avant et arrière (11, 12 ; 13, 14) sont accouplés de manière mécanique à la structure de carrosserie de véhicule (2) par l'intermédiaire d'un élément de renforcement avant qui supporte une charnière supérieure (5) de la portière avant et d'un élément de renforcement arrière sous la forme d'un support de verrouillage de portière arrière (10a).

2. Ensemble de portières de véhicule selon la revendication 1, **caractérisé en ce que** lesdites poutre supérieure avant (11) et poutre inférieure avant (12) ont leurs extrémités avant respectives fixées à un élément de renforcement (5a) comprenant une charnière supérieure avant (5) faisant partie dudit agencement de charnières avant (5, 6).

3. Ensemble de portières de véhicule selon la revendication 2, **caractérisé en ce que** ladite poutre supérieure arrière (13) a son extrémité avant fixée à une zone proche d'une charnière supérieure arrière (7) faisant partie dudit agencement de charnières arrière (7, 8), ladite poutre inférieure arrière (14) ayant son extrémité avant fixée à proximité d'une charnière inférieure arrière (8) faisant partie dudit agencement de charnières arrière (7, 8).

4. Ensemble de portières de véhicule selon l'une quelconque des revendications 2 et 3, **caractérisé en ce que** les extrémités arrière de la poutre supérieure arrière (13) et de la poutre inférieure arrière (14) sont fixées à un élément de renforcement (10a) supportant un dispositif de verrouillage arrière (10).

5. Ensemble de portières de véhicule selon l'une quelconque des revendications 2 à 4, **caractérisé en ce que** l'extrémité arrière de ladite poutre inférieure avant (12) est agencée de manière à recouvrir, au moins partiellement, une zone d'impact latérale (15) dans ladite structure de carrosserie de véhicule (2).

6. Ensemble de portières de véhicule selon l'une quelconque des revendications 2 à 5, **caractérisé en ce que** les sections d'extrémité desdites poutres (11, 12, 13, 14) sont agencées de manière à recouvrir latéralement ladite structure de carrosserie de véhicule (2).

7. Ensemble de portières de véhicule selon l'une quelconque des revendications 2 à 6, dans lequel ledit véhicule (1) comprend une poutre latérale avant (18), **caractérisé en ce que** ladite poutre supérieure avant (11) est alignée avec ladite poutre latérale (18) le long d'une direction longitudinale généralement commune, pour l'absorption d'une force d'impact (F_{F}).

8. Ensemble de portières de véhicule selon l'une quelconque des revendications précédentes, **caractérisé en ce que** l'agencement de poutres de renforcement avant (11, 12) et l'agencement de poutres de renforcement arrière (13, 14) comprennent au moins une zone à déformation contrôlée (12a ; 14a).

9. Ensemble de portières de véhicule selon la revendication 8, **caractérisé en ce que** ladite au moins une zone à déformation contrôlée (12a ; 14a) est agencée en tant que section affaiblie (12a) dans la poutre inférieure avant (12).

10. Ensemble de portières de véhicule selon la revendication 8 ou 9, **caractérisé en ce que** ladite au moins une zone à déformation contrôlée (12a ; 14a) est agencée en tant que section affaiblie (12a) dans la poutre inférieure arrière (14).

11. Véhicule comprenant un ensemble de portières de véhicule selon l'une quelconque des revendications précédentes.
